# EUROPEAN PATENT SPECIFICATION

(11) **EP 2 764 934 B1**
(45) Date of publication and mention of the grant of the patent: **17.06.2015**
(21) Application number: 13154806.7
(22) Date of filing: 11.02.2013
(51) Int. Cl.: B22C 9/02, B22C 9/04, B22D 23/02, B29C 67/00, B22D 23/06

(54) **Method for manufacturing an element of a plurality of casting mold elements and casting method for manufacturing and system for casting a 3-dimensional object**
Verfahren zum Herstellen eines Elements mehrere Gussformelemente und Gussverfahren zum Herstellen und System zum Gießen eines dreidimensionalen Objekts
Procédé de fabrication d'un élément d'une pluralité d'éléments de moulage, procédé de moulage pour fabriquer et système permettant de couler un objet tridimensionnel

(43) Date of publication of application: 13.08.2014
(62) Divisional of application: 13194380.5
(73) Proprietor: King Abdulaziz City for Science & Technology (KACST), 11442 Riyadh (SA); Cambridge Enterprise Limited, Trinity Lane Cambridge Cambridgeshire CB2 1TN (GB)
(72) Inventor: Baabbad, Mazen Abdullah, 11442 Riyadh (SA); Hutchings, Ian, Cambridge, Cambridgeshire CB2 1PZ (GB); Martin, Graham, Cambridge, Cambridgeshire CB2 1 PZ (GB); Castrejon-Pita, Alfonso, Cambridge, Cambridgeshire CB2 1PZ (GB)
(74) Representative: Goddar, Heinz J.

(56) References cited:
- EP-A2- 0 431 924
- WO-A1-00/07757
- WO-A1-2008/085134
- WO-A1-2011/082348
- CH-A- 266 939
- DE-C- 868 494
- GB-A- 341 649
- US-A1- 2002 083 886
- US-A1- 2011 213 482
- US-B1- 6 363 606
- E. BASSOLI, A. GATTO, L. IULIANO, M.G. VIOLENTE: "3D printing technique applied to rapid casting", RAPID PROTOTYPING JOURNAL, vol. 13, no. 3, 2007, pages 148-155, XP002695629,

## Description

The present invention relates to a method for manufacturing an element of a plurality of casting mould elements assemblable to a 3-dimensional object casting mould.

One kind of manufacturing method is shaping. Shaping includes casting. There are different kinds of casting methods. For example, sand casting, also known as sand mold casting, is a metal casting method characterized by using sand as the mould material. In addition to the sand, a suitable bonding agent (usually clay) is mixed or occurs with the sand. The mixture is moistened, typically with water, but sometimes with other substances, to develop strength and plasticity of the clay and to make the aggregate suitable for molding. The sand is typically contained in a system of frames or mold boxes known as a flask. The mold cavities and gate systems are created by compacting the sand around models, or patterns, or carved directly into the sand.

Investment casting is another casting method. It is also called lost-wax casting Lost foam casting is a modern form of investment casting that eliminates certain steps in the method. Casts can be made of the wax model itself, the direct method, or of a wax copy of a model that need not be of wax, the indirect method. The investment casting method is known for its capability to produce castings with relatively high dimensional precision, but so far, it takes longer time and is expensive in comparison to sand casting methods.

Additive/layered manufacturing or 3D printing is a process of making 3-dimensional solid objects from a digital model. 3D printing is achieved using additive processes, where an object is created by laying down successive layers of material. 3D printing is usually performed by a materials printer using digital technology. The use of additive manufacturing takes virtual designs from computer aided design (CAD) or animation modelling software, transforms them into thin, virtual, horizontal cross-sections and then creates successive layers until the model is complete. It is a WYSIWYG-process where the virtual model and the physical model are almost identical. To perform a print a machine reads in the design and lays down successive layers of liquid, powder, or sheet material, and in this way builds up the model from a series of cross sections. These layers, which correspond to the virtual cross section from the CAD model, are joined together or fused automatically to create the final shape. The primary advantage of additive manufacturing is its ability to create almost any shape or geometric feature.

Inkjet methods or inkjet printing are/is a sub-set of additive/layered manufacturing.

There is also a number of sand casting based additive/layered inkjet methods. The sand casting based additive/layered inkjet methods usually use the following steps:
1. dust a surface with a layer sand,
2. dispense binder (by inkjet printing head) to glue the selected areas of the dusted surface,
3. build a new layer at the top of the layer in above first step, and
4. remove the unbound sand (e.g. use compressed air to blow away loose sand),
wherein steps 2 and 3 are usually repeated before the final step (step 4).

WO 2001/082348 A1 discloses a three-dimensional casting mold comprising six individual casting mold elements.

EP 0 431 924 A2 shows the building of cast mold elements by 3D-printing.

US 2011/213482 A1 discloses building wax patterns by 3D-printing technique.

Furthermore, US 6 363 606 B1 discloses manufacturing structures composed of different materials and different areas of a layer by 3D-printing.

E. Bassoli, A. Gatto, L. Iuliano, M. G. Violente: "3D printing technique applied to rapid casting", Rapid Prototyping Journal, vol. 13, no.3, 2007, pages 148-155, XP002695629, is directed to 3D printing applied to rapid casting.

It is an object of this invention to provide a casting method that is precise, but still quicker and less expensive than known investment casting methods.

This object is accomplished according to the present invention by a method for manufacturing an element of a plurality of casting mold elements assemblable to a 3-dimensional object casting mold, comprising superimposing a plurality of mold layers, wherein each mold layer is made as follows: a) depositing casting pattern material inside at least one casting pattern material filling area determined by a digital model of the casting pattern, b) depositing temporary filling jacket material for making a boundary for at least one mold material filling area around the at least one casting pattern material filling area, c) filling the at least one mold material filling area with a casting mold material, d) removing the temporary filling jackets, e) filling the voids left by the removed jackets with the casting mold material and f) finishing the upper surface of the layer; and removing the casing pattern material.

Preferably, in the method for manufacturing an element of a plurality of casting mould elements, at least one of the depositing steps a) and b) and filling steps c) and e) is carried out by one or more materials printers, in particular 3D-printer(s) and inkjet printer(s).

According to a special embodiment, the casting pattern material is chemically dissolvable and has a higher melting and evaporation point than the temporary filling jacket material and the temporary filling jackets are removed by evaporation when exposed to heat in the removing step d) and the casting pattern material is chemically removed in the removing step.

Conveniently the temporary filling jacket material is wax or foam.

In addition, in step c) the casting mold material may comprise fine grain powder, in particular ceramic powder or wherein the casting mold material is a liquid suspension containing fine grain powder, in particular ceramic powder, mixed with a liquid binder. In general, usually the casting mold is made out of ceramic.

Preferably in the depositing step b) boundaries are made for at least two mold material filling areas and in the filling step c) casting mold materials comprising powders with different grain sizes are used, so that the powder with finer grains is in the mold material area that is close to the casting pattern material filling area and the powder with the coarser grains is farther outside with regard to the casting pattern material filling area.

Advantageously, the powder or at least one powder contains magnetic particles and/or further comprising: in at least one of the layers arranging magnetic material or parts outside of the at least one casting pattern material filing area. This enables the handling/transport of the resulting structure by magnetic forces.

Conveniently, the finishing of the upper surface of the layer comprises grinding the same.

Further, the superimposing step may be carried out, until a geometric discontinuity of the casting pattern is present.

According to a further special embodiment, in the depositing step a) the casting pattern material is deposited on a base plate out of the mold material or in the depositing step a) the casting pattern material may be deposited on a base plate out of the casting pattern material, so that the base plate material is removed together with a casting pattern material when removing the casting pattern material.

The invention is based on the surprising knowledge that by employing the principles of additive/layered manufacturing and applying them to the well-known investment casting method a new method results that is precise as the known investment casting method, but quicker and less expensive. By applying the concept of additive/layered manufacturing (additive layering), in which the geometry of the casting is conveniently divided into smaller sub-castings (casting mold elements), each has its metal feeding system and shrinkage allowance, so that geometric discontinuities can be also attended. Unlike most of the present casting methods which use one level of metal pouring sprues, runners, runner wells, gates and risers, the present invention at least in a special embodiment - employs multi-levels of metal (or any casting material) pouring and gating system, which adds more versatility and flexibility for the casting geometries.

In the existing investment casting methods, high dimensional precision is achieved by using fine grain mold powder, usually ceramic powder, that is glued by a special heat resistant glue to the wax or foam pattern. Then the coated wax pattern is allowed to cure in a special oven. After that, another coating of glue is applied to the pattern and a larger grain ceramic powder is applied and so on. Finally, the wax pattern is melted and evaporated by heat, leaving a cavity that is going to be filled by the molten metal. In contrast, according to the present invention, so to say a multi-layered investment casting mold with multi-layered molten metal feeders, gates, raisers etc. is built.

In addition, in the existing metal casting methods hot molten metal is poured in the cavities of the mold. This may be done either manually (which may have safety, accuracy and efficiency concerns) or automatically (which may be expensive). In contrast, according to a special embodiment of the present invention, the metal is applied as a cold paste, which is heated to melting temperature and mixed in situ. This gives the advantage of improving the economics, safety, accuracy and versatility of the method.

Further features and advantages of the invention will become clear from the enclosed claims and the following description, in which a number of embodiments of the invention are illustrated in detail with reference to the schematic drawings, wherein
Figure 1 depicts a perspective view of a system for casting a 3-dimensional object;
Figure 2 depicts a top view of a casting mold element during its manufacturing according to a method in accordance with a special embodiment of the invention;
Figures 3 to 10 depict cross-sectional views of a casting element at different stages during its manufacturing according to a method in accordance with a special embodiment of the invention;
Figure 11 depicts an example of a casting mold out of two parts;
Figures 12 and 13 depict cross-sectional views of another casting element at different stages during its manufacturing according to a method in accordance with a special embodiment of the invention;
Figure 14 depicts a perspective view of the individual electric induction heating means of the system of figure 1;
Figure 15 depicts an individual illustration of the heating means of figure 14 without induction coil;
Figure 16 depicts schematically the transporting means of the system of figure 1 when transporting a casting mold element;
Figures 17 to 21 depict schematically a different kind of transporting means of a system in use;
Figures 22A to 27B each depicts a perspective view (A) and cross-sectional view (B), respectively, of the heating means at different stages of a casting method;
Figure 28 depicts an example of a 3-dimensional object to be cast;
Figure 29 depicts the object of figure 28 divided into three object elements;
Figure 30 depicts the cast object before removing the casting mold material; and
Figure 31 depicts a flow diagram of a casting.

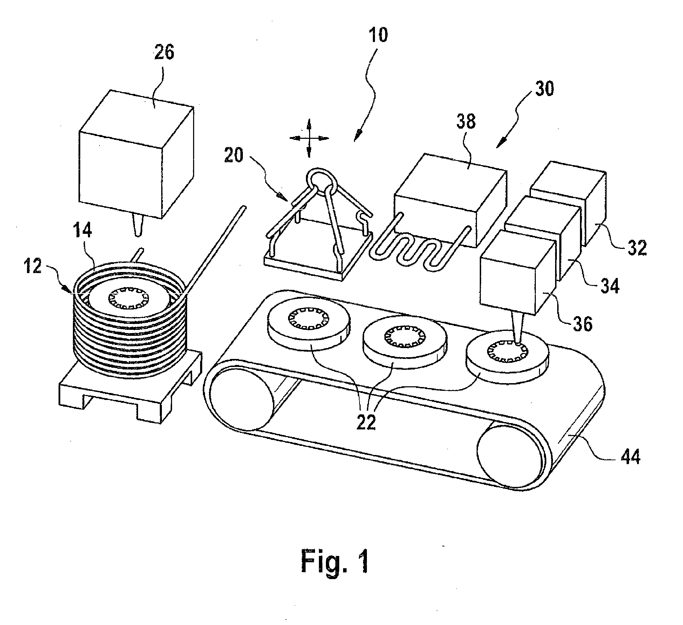

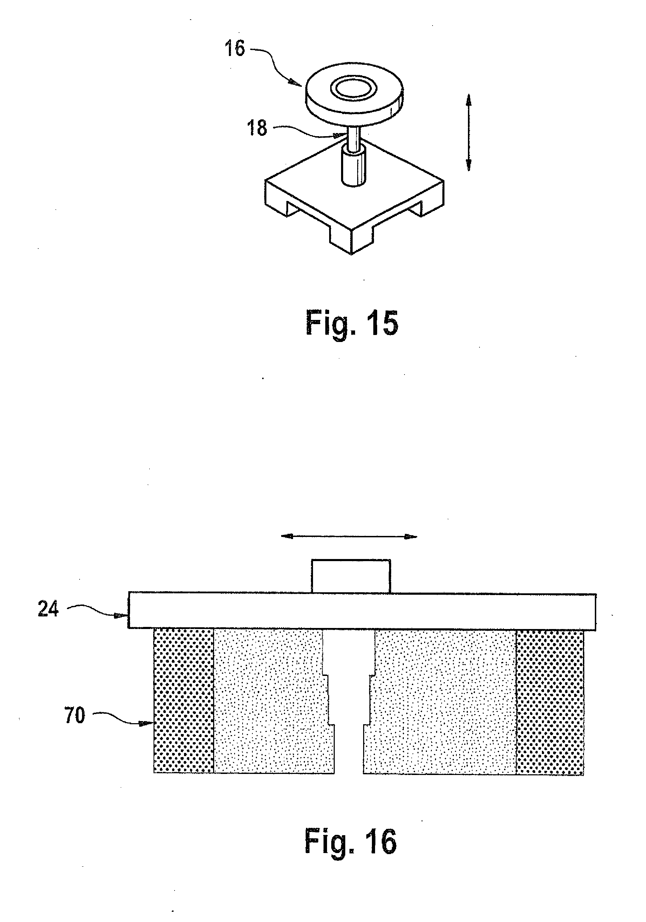

The system 10 for casting a 3-dimensional object shown in figure 1 comprises an electric induction heating means 12 having an electric induction coil 14 and a carrier 16 at the centre of the induction coil 14, wherein the carrier 16 is height-adjustable by way of a piston 18 (for example shown in figure 15). Further, said system 10 comprises a transporting means 20 for transporting casting mold elements like 22 that is shown in figure 1 at different stages of its manufacturing. Said casting mold element 22 in combination with at least one further casting mold element (not shown) is assemblable to a 3-dimensional object mold. Said transporting means 20 comprises an electromagnet 24 (shown in figure 16) that also serves to stack the casting mold elements on said carrier 16.

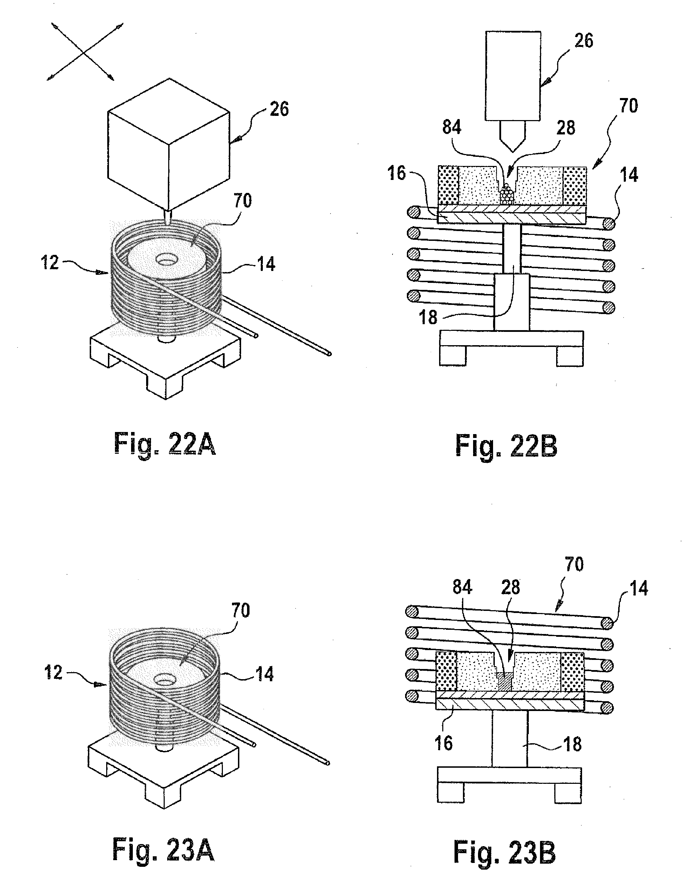

Above said electric induction heating means 12 there is a dispensing means 26 for dispensing object material into a cavity 28 (see e.g. figures 22A und 22B) of the casting mold element 22. Said dispensing means 26 also belongs to the system 10 and comprises an inkjet type computer controlled material dispenser.

In addition, said system 10 comprises a control means (hot shown) adapted for controlling the operation of the induction heating means 12, the transporting means 20, the dispensing means 26 and the height-adjustment of the carrier 16.

The system 10 further comprises a unit 30 for manufacturing the casting mold elements, e.g. the casting mold element 22. Said unit 30 comprises a dispensing means 32 for dispensing casting pattern material, a dispensing means 34 for dispensing temporary filling jacket material, a dispensing means 36 for dispensing mold material, a removing means 38 for removing temporary filing jacket material, a finishing means for finishing an upper surface of the casting mold element, e.g. 22, a removing means for removing a casting pattern material and a transporting means 44 for transporting the semi-finished (or intermediate) casting mold elements within the unit 30 and the finished casting mold elements, e.g. 22, to the transporting means 20 for transporting them to the carrier 16. The control means (not shown) is also adapted for controlling the operation of said unit 30 for manufacturing the casting mold elements such that a method according to anyone of claims 1 to 10 can be performed.

All of said dispensing means 32 to 36 are inkjet type computer controlled material dispensers. The removing means 38 comprises a heater for evaporation of the casting pattern material.

The finishing means comprises a grinding means and the removing means comprises a chemical means for removing the casting pattern material.

The transporting means 44 comprises a conveyor for transporting or transferring the casting mold elements or "precursors" (intermediate products).

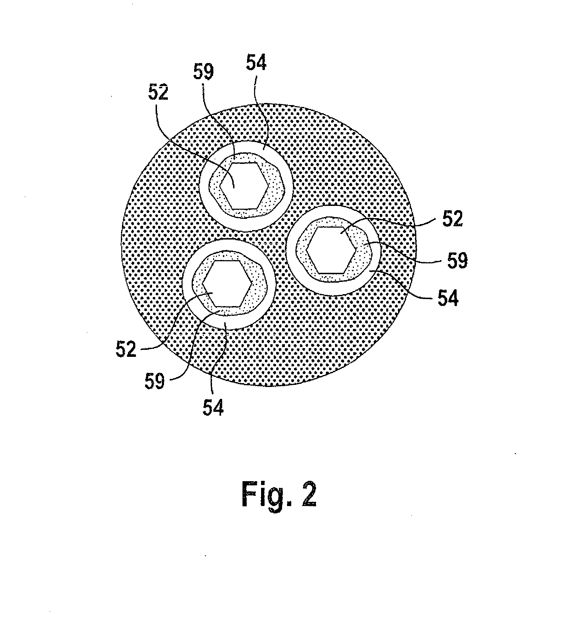

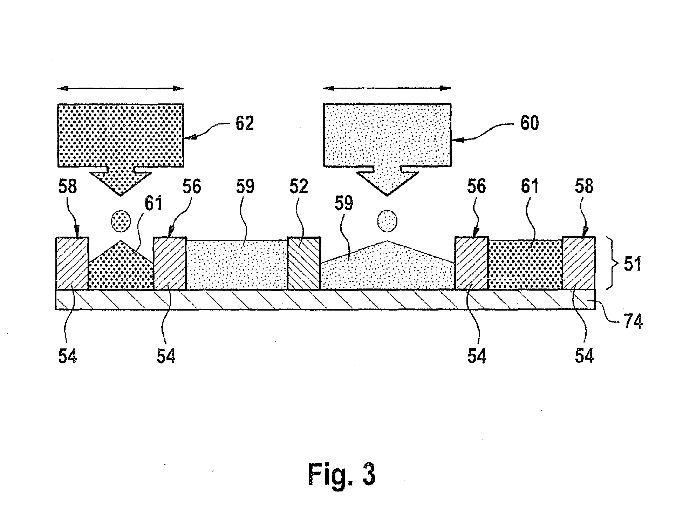

A method for manufacturing an element of a plurality of casting mold elements in accordance with a special embodiment of the invention will be now described with reference to figures 2 to 10, in particular figures 3 to 10.

On "Assembly level 1 (layer level)", a digital model of the casting pattern (all the casting pattern dimensions and specifications are stored in a 3D CAD-file) is divided into thin planar layers. The minimum layer thickness depends on the maximum allowable precision of the method (e.g. minimum powder grain size, minimum vertical step of the machine etc.). Each layer 51 contains a planar cross-section of the casting pattern. The casting pattern cross-section is made of a material that can be dispensed from a small nozzle and later dissolved chemically. The casting pattern material should also be stable under moderate temperatures up to the evaporation temperature of e.g. wax used in the other steps of the method. The section of the casting pattern can consist of a single zone or multiple zones.

Each layer further contains radially outside extending envelopes of the cross-section. To reduce the costs of the method, these envelopes are made out of gradually increasing grain size powder (casting mold material, which is usually ceramic). The fine grains are immediately surrounding the cross-section of the casting pattern, while the grain size gets larger when moving away from the cross-section of the casting pattern. However, if the casting dimensional tolerance at certain layers requires the highest dimensional precession, then only the fine grain powder may be used throughout the layer and no (further) envelopes will be present.

The grains of the powder of the casting mold material contain some ferrous (or similar material that can be attracted by magnets) particles that will be used in moving a stack of layers by the electromagnet of the transporting means 20 in subsequent levels. However, to protect the casting mold material from being contaminated with such metallic grains, some kind of ceramic coating may be introduced to prevent the ferrous particles from adhesion. Alternatively, ferrous inserts may be introduced at locations that do not interfere with the casting mold.

In case that the casting object itself is an assembly, any inserts (particularly those of material with higher melting point than the casting mold material) that should be added to the casting mold or casting mold element, then it can be added on this level of assembly. In this case, it would be inserted in the casting mold in its corresponding location and mold powder with binder will be poured around it and is treated the same way as the wax pattern.

In figure 3 casting pattern material 52 is already deposited inside a casting pattern material filling area that corresponds to the cross-section determined by a digital model of the casting pattern. In particular, the casting pattern material 52 was dispensed by the dispensing means 32 for dispensing casting pattern material.

Furthermore, by means of the dispensing means 34 for dispensing temporary filling jacket material 54, like wax, which has a low melting temperature and evaporation temperature, boundaries 56 and 58 are already made around the casting pattern material 52.

Figure 3 shows two dispensing means 60 and 62 for dispensing casting mold material. The system shown in figure 1 comprises only one dispensing means, namely 36, for dispensing casting mold material. Said dispensing means 36 might fulfil the functions of said two dispensing means 60 and 62.

Said dispensing means 60 and 62 may be inkjet dispensers. Dispensing means 60 is used for filling the area around the casting pattern material 52, restricted by the boundary 56, with casting mold material 59 that comprises a liquid suspension containing fine grain powder particles (e.g. ceramic) mixed with a liquid binder.

The dispensing means 62 is used for filling the mold material filling area between the boundaries 56 and 58 with casting mold material 61 that comprises a liquid suspension containing coarse grain powder particles (e.g. ceramic) mixed with the liquid binder. To this end, both dispensing means 60 and 62 are horizontally and vertically movable.

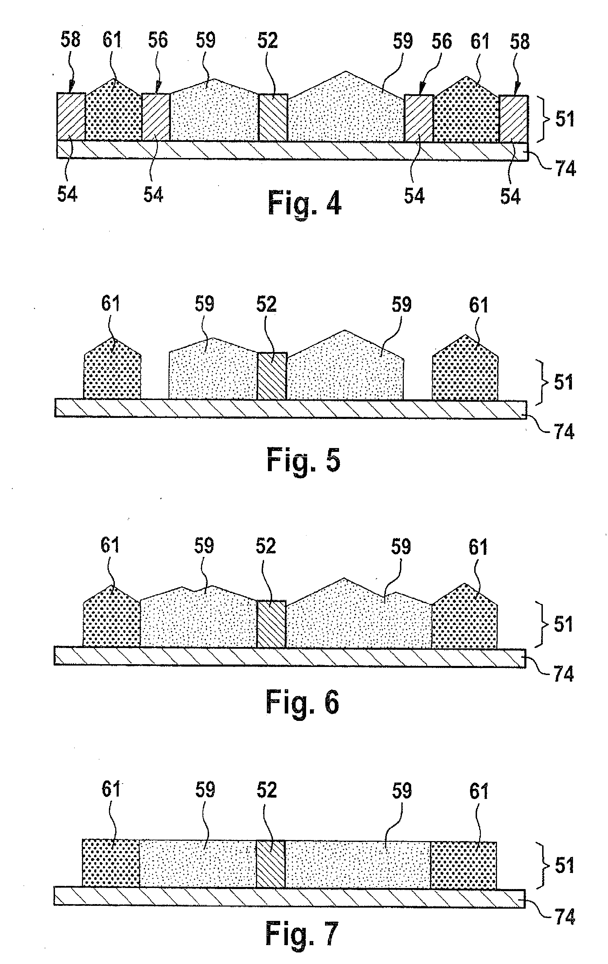

Figure 4 shows the resulting mold layer 51 before removing the temporary filling jackets and corresponding to the boundaries 56 and 58 (see figure 5) by application of heat by means of the removing means 38 for removing the temporary filling jacket material shown in figure 1.

As shown in figure 6, thereafter the dispensing means 60 for dispensing casting mold material is once again used for filling the voids left by the evaporated temporary filling jacket material 54 (except those of the edges).

As shown in figure 7, then the upper surface of the layer 51 is finished by finishing means (not shown). In particular, grinding discs (not shown) grind the layer 51 to size and remove the debris. The grinding should be gradual to avoid contaminating the different zones of the layer with debris coming from neighbouring zones.

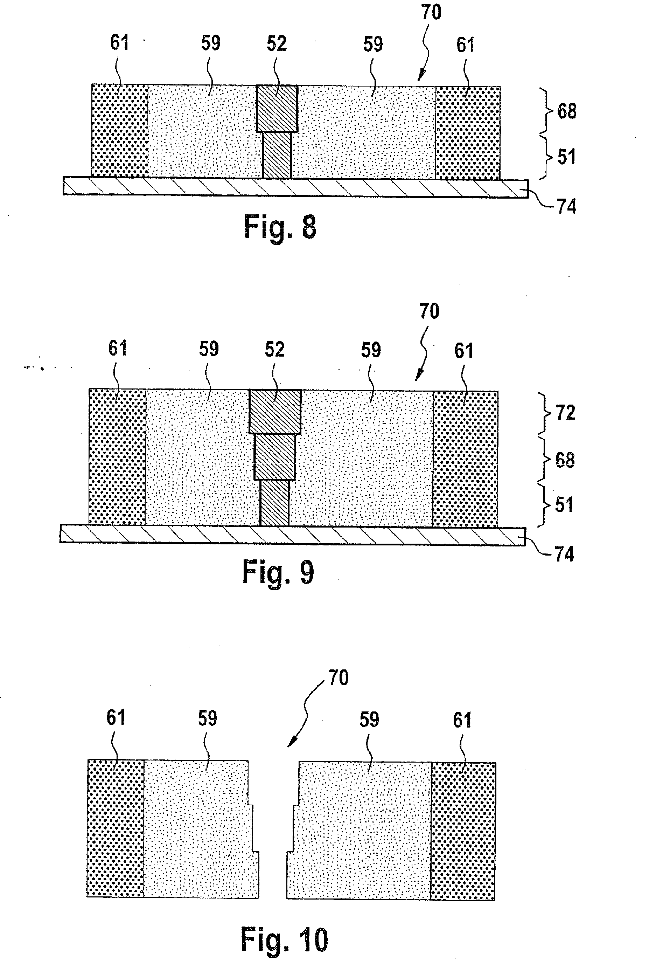

In figure 8 another layer 68 is already added. Said layer is made in the same way as the lower layer 51.

Figure 9 shows the whole casting mold element 70 as a stack of the layers 51 and 68 as well as a further layer 72. Please note that the layer 51 is deposited on a base plate 74 out of the casting pattern material. Said semi-finished casting mold element 70 is based on the following consideration: If the geometry of the casting object is continuous (in the sense that it can be filled by molten metal using a single metal feeding system), then the layers are allowed to be stacked one on top of the other, until a geometric discontinuity is present. When a geometric discontinuity is present, then the layers stacking stops and the group of layers are grouped together as one casting mold element (tray). For example, the geometry of the continuous casting mold may be different than the geometry of its molten metal feeding system. Accordingly, both are made in two different casting mold elements (trays) (i.e. two different layer stacks).

Figure 10 now shows the step of removing the casting pattern material 52. Said casting pattern material 52 and the material of the base plate 74 are chemically removed. If the casting mold element 70 were the casting mold bottom, then the material of the base plate 74 were made from the same material as the casting mold and not removed.

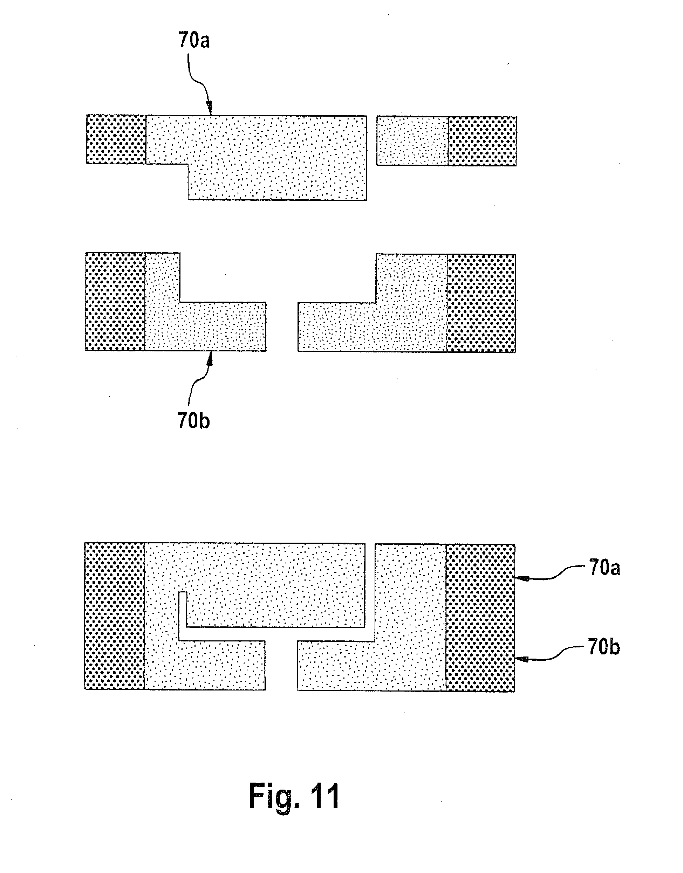

Figure 11 shows an example of a casting mold that is made from two parts, namely an upper part 70a and a lower part 70b before (above) and after (below) assembly.

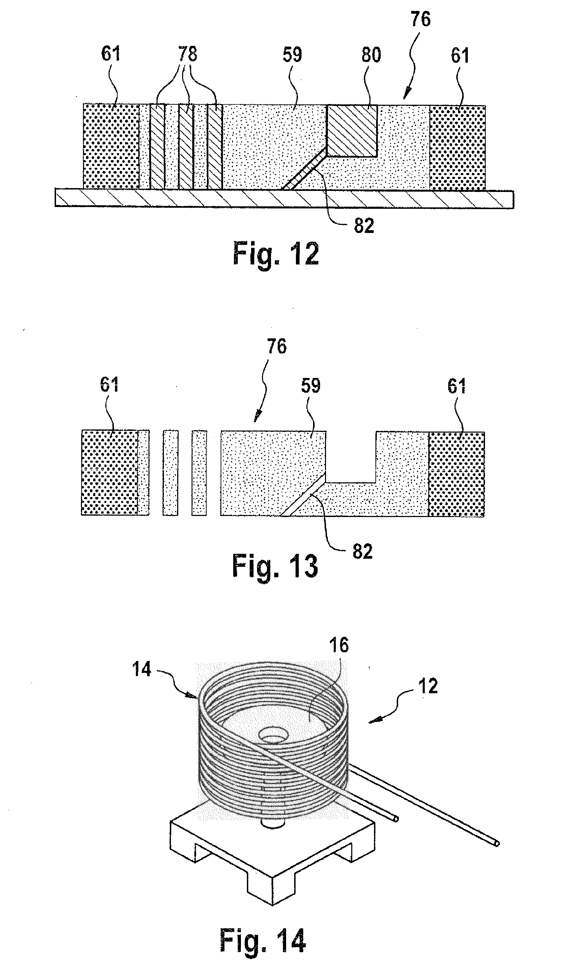

Figure 12 shows another casting mold element 76, namely a molten material feeding system with micro-gates, risers, sprues, runners and runnerwells. Only the casting pattern material 78, a riser 80 and a sprue/runner 82 are shown. Said molten metal feeding system is built layer by layer in the same way as the casting mold element 70 was built. The final casting mold element 76 is shown in figure 13.

Figure 14 shows details of the electric induction heating means 12 of figure 1. Said electric induction heating means 12 comprises an electric induction coil 14 and a carrier 16 that could be also named as a stage. Said carrier 16 is fixed at the upper end of the piston 18 that is movable up and down at its centre (see figure 15).

Figure 16 schematically shows the horizontal and vertical transporting of the casting mold elements 70. By way of the transporting means 20 that comprises the electromagnet 24 the casting mold element 70 is transported to the electric inducting heating means 12 of figure 14.

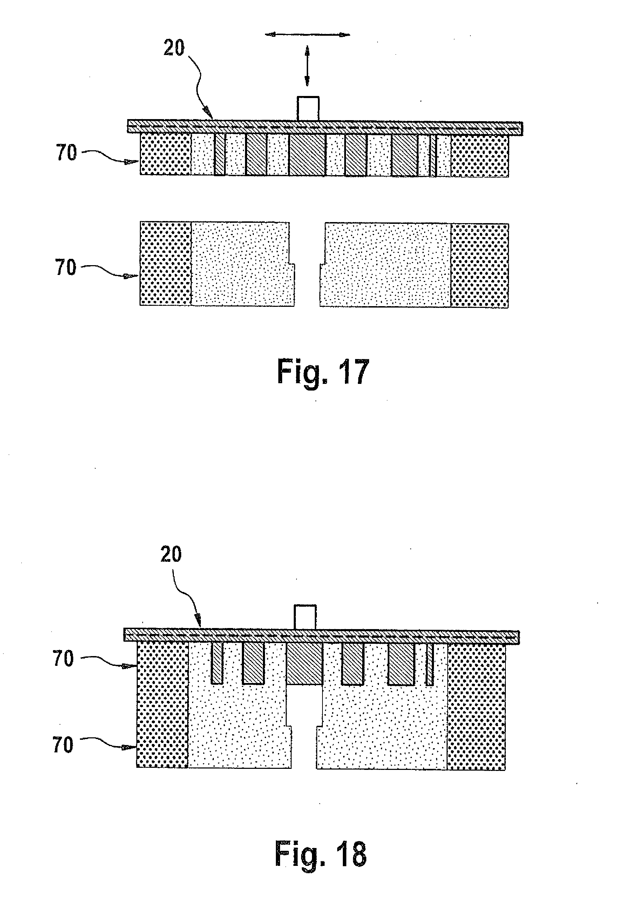

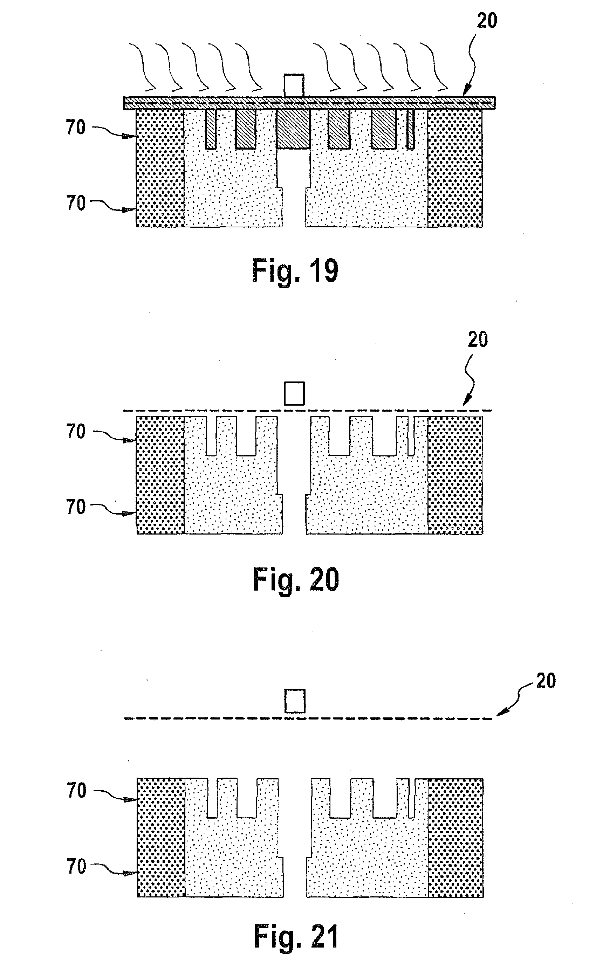

Figures 17 to 21 depict schematically a different kind of transporting means 20 of a system in use. The transporting means 20 and the casting mold element 70 are bound by wax. In this way the casting mold element 70 can be transported by the transporting means 20 to another casting mold element 70 (refer to figures 17 and 18). In figure 19 heat is applied to evaporate the wax and to free the transporting means 20 (see also figure 20). Then the transporting means 20 moves away (see figure 21). The casting mold elements 70 are stacked on top of each other.

As shown in figure 22A and 22B the casting mold element 70 is deposited on the carrier 16. With the piston 18 of the electric inducting heating means (furnace) 26 in the raised up position to clear the heating zone of said electric inducting heating means 12 and by using the dispensing means 26 object material 84, for example powder mixed with plasticizer, is poured in the cavity 28.

As shown in figures 23A and 23B, thereafter the carrier 16 with the casting mold element 70 is lowered for heating, until the plasticizer evaporates and the metal melts.

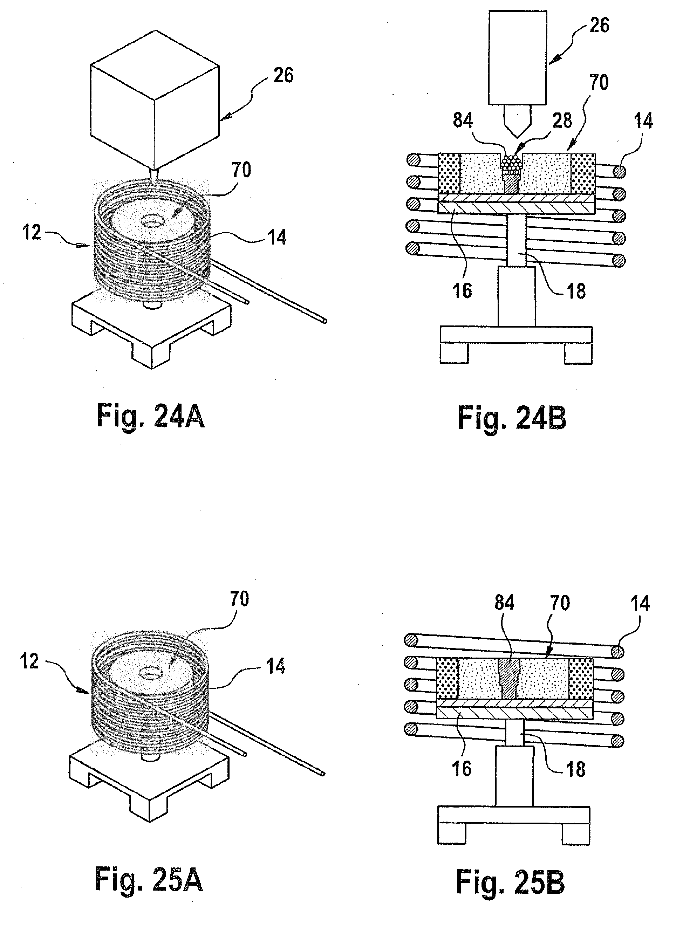

Then the carrier 16 is raised and additional object material 84 is poured into the cavity 28 (see figures 24A and 24B).

These steps are repeated, until the molten object material 84 completely fills the cavity 28 (see figures 25A and 25B).

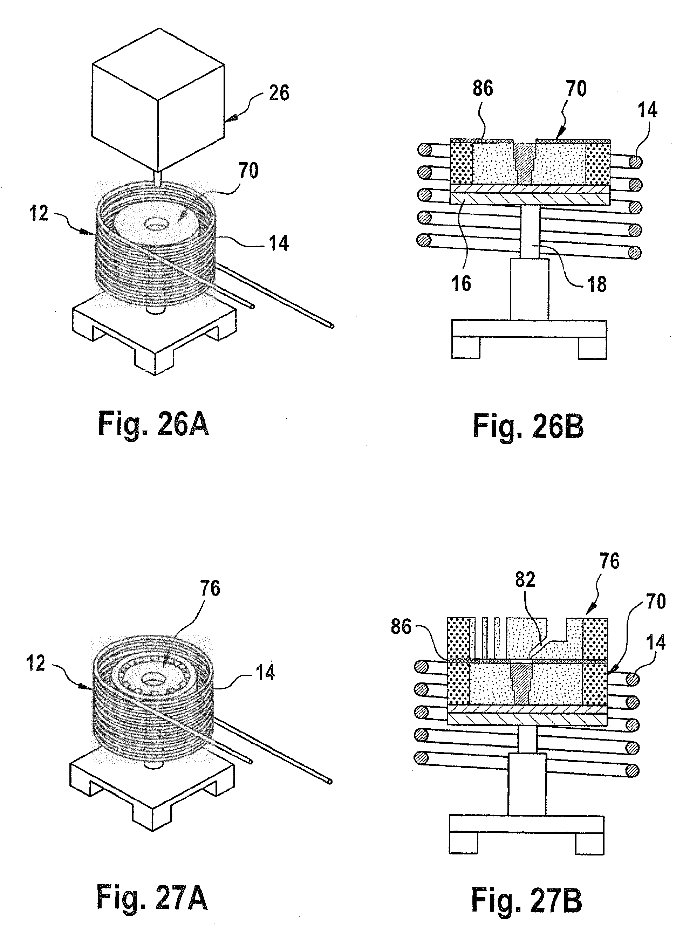

Thereafter the carrier 16 is raised and for example by using an inkjet head some thin layer of binder 86 (fine casting mold material powder can be added) is poured on the top surface of the first casting mold element 70 (see figures 26A and 26B) to bind the next casting mold element 76 (see figures 27A and 27B).

Thereafter the casting mold element 76 is placed at the top of the casting mold element 70 by means of the transporting means 20 and then lowered in the electric inducting heating means 12 to keep it hot (see figures 27A and 27B).

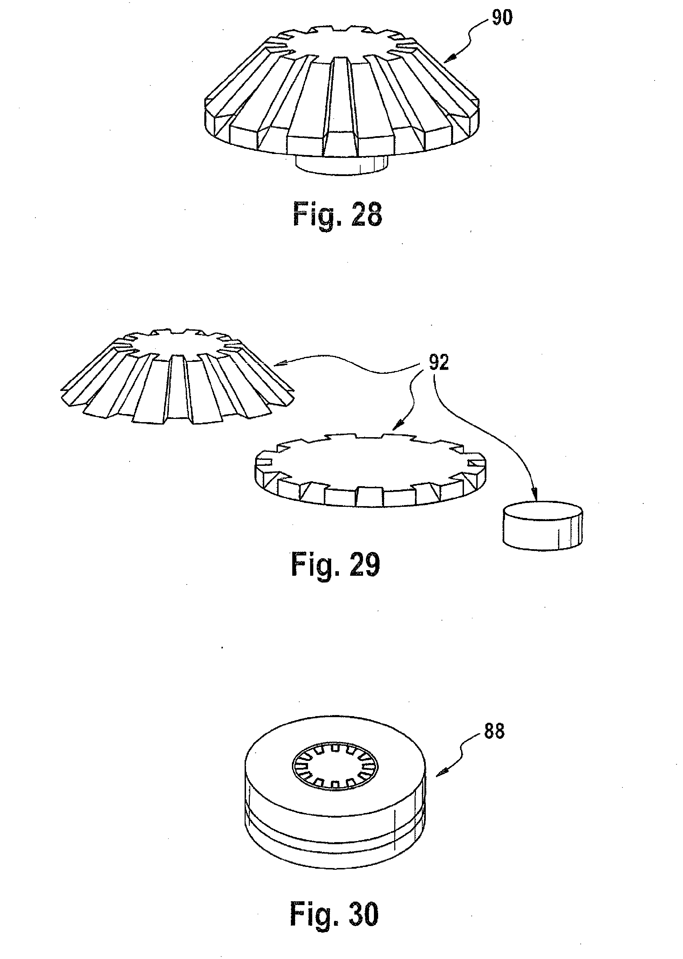

The steps are repeated, until all the casting mold elements are placed inside the electric induction heating means 12 and the casting mold 88 is complete (see figure 30).

Thereafter the induction heating is stopped and the object material 84 is allowed to solidify and to cool to a suitable temperature. Finally, the casting mold material is removed by mechanical means to extract the finished object 90 (see figure 28). For a better understanding of the method, please also refer to figure 29. Said figure shows an example of an object 3D model 92 divided into sub-parts. For each of said sub-parts a casting mold element will be manufactured. Said casting mold elements are assemblable to a 3-dimensional object casting mold that can be used for casting the object.

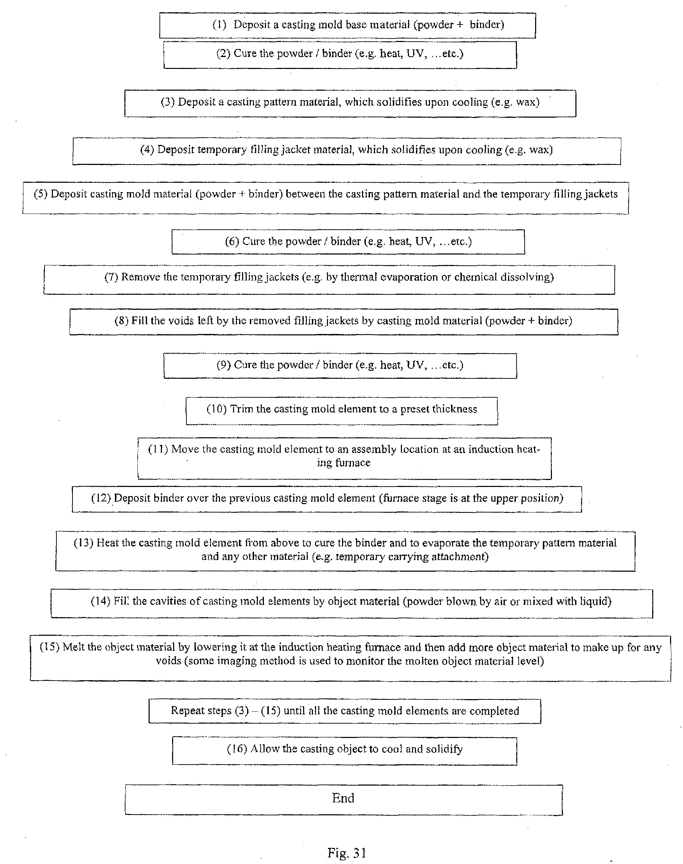

Figure 31 depicts a flow diagram of a casting method. Said casting method could be considered in principle as a casting method for manufacturing a 3-dimensional object as described above comprising a method for manufacturing an element of a plurality of casting mold elements as described above.

In block 1 a casting mold base material (powder + binder) is deposited. Thereafter, the powder/binder is cured for example by heat, UV etc. (2). Then a casting pattern material is deposited, which solidifies upon cooling (e.g. wax) (3). In block 4, temporary filling jacket material is deposited, which solidifies upon cooling (e.g. wax). Further, in block 5, casting mold material (powder + binder) is deposited between the casting pattern material and the temporary filling jackets. Thereafter, the powder/binder is cured for example by heat, UV etc. (6). Then the temporary filling jackets are removed for example by thermal evaporation or chemical dissolving (7). In block 8 the voids left by the removed filling jackets are filled by casting mold material (powder + binder). Then the powder/binder is cured for exampled by heat, UV etc. (9). Thereafter, the casting mold element is trimmed to a preset thickness (10). In block 11 the casting mold element is moved to an assembly location at an induction heating furnace. Thereafter, binder is deposited over the previous casting mold element (furnace stage is at the upper position) (12). Then in block 13 the casting mold element is heated from above to cure the binder and to evaporate the temporary pattern material and any other material (e.g. temporary carrying attachment). In block 14, the cavities of the casting mold elements are filled by object material (powder blown by air or mixed with liquid). The object material is melted then by lowering it at the induction heating furnace and then more object material is added to make up for any voids (some kind of imaging method is used to monitor the molten object material level) (15). Thereafter, the steps in blocks 3 to 15 are repeated, until all the casting mold elements are completed. In block 16 the casting object is allowed to cool and solidify.

Even though a metal powder hopper can be used to fill the casting mold material, adding the material (metal) in the form of paste can have a better precision, because the sputtering is greatly reduced. The plasticizer can be any liquid material that matches with the type and grain size of the (metal) powder used and then is evaporated by heat.

When there are inner cores that must be removed after casting, these cores are filled in specially made cavities (are filled with wax first, and treated similar to the casting mold cavity, but then filled with special casting mold core material that is then chemically dissolved out the casting after the part is cooled).

The casting pattern material and temporary filling jackets material can be interchanged. For example, the casting pattern material can be made out of wax that is evaporated by heat, and the temporary filling jackets can be made from material that can be dissolved chemically.

## Claims

1. Method for manufacturing an element of a plurality of casting mold elements (22, 70, 76) assemblable to a 3-dimensional object casting mold, (88) comprising:
superimposing a plurality of mold layers (51, 68 72), wherein each mold layer is made as follows:
a) depositing casting pattern material (52) inside at least one casting pattern material filling area determined by a digital model (92) of the casting pattern,
b) depositing temporary filling jacket material (54) for making a boundary (56, 58) for at least one mold material filling area around the at least one casting pattern material filling area,
c) filling the at least one mold material filling area with a casting mold material (59 or 61),
d) removing the temporary filling jackets,
e) filling the voids left by the removed jackets with the casting mold material (59 or 61) and
f) finishing the upper surface of the layer (51 or 68 or 72);
and
removing the casting pattern material (52).

2. Method according to claim 1, wherein at least one of the depositing steps a) and b) and filling steps c) and e) is carried out by one or more materials printers, in particular 3D-printer(s) and inkjet printer(s).

3. Method according to claim 1 or 2, wherein the casting pattern material (52) is chemically dissolvable and has a higher melting and evaporation point than the temporary filling jacket material (54) and the temporary filling jackets are removed by evaporation when exposed to heat in the removing step d) and the casting pattern material (52) is chemically removed in the removing step.

4. Method according to any one of claims 1 to 3, wherein the temporary filling jacket material (54) is wax or foam.

5. Method according to any one of the preceding claims, wherein in step c) the casting mold material (59) comprises fine grain powder, in particular ceramic powder or wherein the casting mold material (59) is a liquid suspension containing fine grain powder, in particular ceramic powder, mixed with a liquid binder.

6. Method according to any one of the preceding claims, wherein in the depositing step b) boundaries (56, 58) are made for at least two mold material filling areas and in the filling step c) casting mold materials (59, 61) comprising powders with different grain sizes are used, so that the powder with finer grains is in the mold material area that is close to the casting pattern material filling area and the powder with the coarser grains is farther outside with regard to the casting pattern material filling area.

7. Method according to any one of claims 5 to 6, wherein the powder or at least one powder contains magnetic particles and/or further comprising: in at least one of the layers (51, 68 or 72) arranging magnetic material or parts outside of the at least one casting pattern material filling area.

8. Method according to any one of the preceding claims, wherein the finishing of the upper surface of the layer (51, 68 or 72) comprises grinding the same.

9. Method according to any one of the preceding claims, wherein the superimposing step is carried out, until a geometric discontinuity of the casting pattern is present.

10. Method according to any one of the preceding clams, wherein in the depositing step a) the casting pattern material (52) is deposited on a base plate (74) out of the mold material or wherein in the depositing step a) the casting pattern material (52) is deposited on a base plate (74) out of the casting pattern material, so that the base plate material is removed together with the casting pattern material when removing the casting pattern material.

## Patentansprüche

1. Verfahren zum Herstellen eines Elements aus einer Vielzahl von Gussformelementen (22, 70, 76), die zu einer 3-dimensionalen Objekt-Gussform (88) zusammensetzbar sind, umfassend:
Übereinandersetzen einer Vielzahl von Formschichten (51, 68, 72), wobei jede Formschicht folgendermaßen hergestellt wird:
a) Abscheiden von Gussstrukturmaterial (52) innerhalb wenigstens eines von einem digitalen Modell (92) der Gussstruktur bestimmten Gussstrukturmaterial-Füllbereichs,
b) Abscheiden von temporärer-Füllmantel-Material (54) zum Herstellen einer Grenze (56, 58) für wenigstens einen Formmaterial-Füllbereich um den wenigstens einen Gussstrukturmaterial-Füllbereich,
c) Füllen des wenigstens einen Formmaterial-Füllbereichs mit einem Gussformmaterial (59 oder 61),
d) Entfernen der temporären Füllmäntel,
e) Füllen der von den entfernten Mänteln zurückgelassenen Hohlräume mit dem Gussformmaterial (59 oder 61) und
f) Endbearbeiten der oberen Oberfläche der Schicht (51 oder 68 oder 72);
und
Entfernen des Gussstrukturmaterials (52).

2. Verfahren gemäß Anspruch 1, wobei wenigstens einer der Abscheidungsschritte a) und b) und Füllschritte c) und e) von einem oder mehreren Materialdruckern, insbesondere 3D-Druckern und Tintenstrahldruckern, durchgeführt wird.

3. Verfahren gemäß Anspruch 1 oder 2, wobei das Gussstrukturmaterial (52) chemisch löslich ist und einen höheren Schmelz- und Verdampfungspunkt als das temporärer-Füllmantel-Material (54) aufweist, und die temporären Füllmäntel durch Verdampfen entfernt werden, wenn sie bei dem Entfernungsschritt d) gegenüber Hitze exponiert werden, und das Gussstrukturmaterial (52) bei dem Entfernungsschritt chemisch entfernt wird.

4. Verfahren gemäß einem der Ansprüche 1 bis 3, wobei das temporärer-Füllmantel-Material (54) Wachs oder Schaumstoff ist.

5. Verfahren gemäß einem der vorstehenden Ansprüche, wobei bei Schritt c) das Gussformmaterial (59) feinkörniges Pulver umfasst, insbesondere Keramikpulver, oder wobei das Gussformmaterial (59) eine flüssige Suspension ist, die feinkörniges Pulver, insbesondere Keramikpulver, mit einem flüssigen Bindemittel gemischt umfasst.

6. Verfahren gemäß einem der vorstehenden Ansprüche, wobei bei dem Abscheidungsschritt b) Grenzen (56, 58) für wenigstens zwei Formmaterial-Füllbereiche hergestellt werden und bei dem Füllschritt c) Gussformmaterialien (59, 61), die Pulver mit verschiedenen Korngrößen umfassen, verwendet werden, so dass sich das Pulver mit feineren Körnern in dem Formmaterialbereich befindet, der nahe dem Gussstrukturmaterial-Füllbereich angeordnet ist, und das Pulver mit den gröberen Körnern weiter außerhalb bezogen auf den Gussstrukturmaterial-Füllbereich angeordnet ist.

7. Verfahren gemäß einem der Ansprüche 5 bis 6, wobei das Pulver oder wenigstens ein Pulver magnetische Partikel enthält und/oder ferner umfasst: in wenigstens einer der Schichten (51, 68 oder 72) Anordnen von magnetischem Material oder magnetischen Teilen außerhalb des wenigstens einen Gussstrukturmaterial-Füllbereichs.

8. Verfahren gemäß einem der vorstehenden Ansprüche, wobei das Endbearbeiten der oberen Oberfläche der Schicht (51, 68 oder 72) Schleifen davon umfasst.

9. Verfahren gemäß einem der vorstehenden Ansprüche, wobei der Schritt des Übereinandersetzens durchgeführt wird, bis eine geometrische Diskontinuität der Gussstruktur vorhanden ist.

10. Verfahren gemäß einem der vorstehenden Ansprüche, wobei bei dem Abscheidungsschritt a) das Gussstrukturmaterial (52) auf einer Grundplatte (74) außerhalb des Gussmaterials abgeschieden wird oder wobei bei dem Abscheidungsschritt a) das Gussstrukturmaterial (52) auf einer Grundplatte (74) außerhalb des Gussstrukturmaterials abgeschieden wird, so dass bei dem Entfernen des Gussstrukturmaterials das Grundplattenmaterial zusammen mit dem Gussstrukturmaterial entfernt wird.

## Revendications

1. Procédé de fabrication d'un élément d'une pluralité d'éléments de moule de coulée (22, 70, 76) pouvant être assemblés en un moule de coulée d'objet en trois dimensions (88), comprenant l'étape suivante:
superposer une pluralité de couches de moule (51, 68, 72), dans lequel chaque couche de moule est constituée de la façon suivante:
a) déposer un matériau de modèle de coulée (52) à l'intérieur d'au moins une région de remplissage de matériau de modèle de coulée déterminée par un modèle numérique (92) du modèle de coulée,
b) déposer un matériau de chemise de remplissage temporaire (54) pour former une frontière (56, 58) pour au moins une région de remplissage de matériau de moule autour de ladite au moins une région de remplissage de matériau de modèle de coulée,
c) remplir ladite au moins une région de remplissage de matériau de moule avec un matériau de moule de coulée (59 ou 61),
d) enlever les chemises de remplissage temporaires,
e) remplir les vides laissés par les chemises enlevées avec le matériau de moule de coulée (59 ou 61),
f) finir la surface supérieure de la couche (51 ou 68 ou 72), et
enlever le matériau de modèle de coulée (52).

2. Procédé selon la revendication 1, dans lequel au moins une des étapes de dépôt a) et b) et des étapes de remplissage c) et e) est exécutée par une ou plusieurs imprimantes de matériau, en particulier une ou plusieurs imprimante(s) 3D et une ou plusieurs imprimante(s) à jet d'encre.

3. Procédé selon la revendication 1 ou 2, dans lequel le matériau de modèle de coulée (52) peut être dissous de façon chimique et présente un point de fusion et d'évaporation plus élevé que le matériau de chemise de remplissage temporaire (54), et les chemises de remplissage temporaires sont enlevées par évaporation lorsqu'elles sont exposées à la chaleur lors de l'étape d'enlèvement d), et le matériau de modèle de coulée (52) est enlevé chimiquement lors de l'étape d'enlèvement.

4. Procédé selon l'une quelconque des revendications 1 à 3, dans lequel le matériau de chemise de remplissage temporaire (54) est une cire ou une mousse.

5. Procédé selon l'une quelconque des revendications précédentes, dans lequel à l'étape c) le matériau de moule de coulée (59) comprend une poudre à grains fins, en particulier une poudre céramique, ou dans lequel le matériau de moule de coulée (59) est une suspension liquide qui contient une poudre à grain fin, en particulier une poudre céramique, qui est mélangée à un liant liquide.

6. Procédé selon l'une quelconque des revendications précédentes, dans lequel à l'étape de dépôt b), des frontières (56, 58) sont constituées pour au moins deux régions de remplissage de matériau de moule, et à l'étape de remplissage c) des matériaux de moule de coulée (59, 61) comprenant des poudres présentant des tailles de grain différentes sont utilisés, de telle sorte que la poudre composée de grains plus fins soit située dans la région de matériau de moule qui est proche de la région de remplissage de matériau de modèle de coulée, et que la poudre composée de grains plus grossiers soit plus éloignée vers l'extérieur par rapport à la région de remplissage de matériau de modèle de coulée.

7. Procédé selon l'une quelconque des revendications 5 ou 6, dans lequel la poudre ou au moins une poudre contient des particules magnétiques et/ou comprenant en outre: dans au moins une des couches (51, 68 ou 72), l'agencement d'un matériau magnétique ou de parties magnétiques à l'extérieur de ladite au moins une région de remplissage de matériau de modèle de coulée.

8. Procédé selon l'une quelconque des revendications précédentes, dans lequel la finition de la surface supérieure de la couche (51, 68 ou 72) comprend le meulage de celle-ci.

9. Procédé selon l'une quelconque des revendications précédentes, dans lequel l'étape de superposition est exécutée jusqu'à ce qu'une discontinuité géométrique du modèle de coulée soit présente.

10. Procédé selon l'une quelconque des revendications précédentes, dans lequel à l'étape de dépôt a) le matériau de modèle de coulée (52) est déposé sur une plaque de base (74) hors du matériau de moule, ou dans lequel à l'étape de dépôt a) le matériau de modèle de coulée (52) est déposé sur une plaque de base (74) hors du matériau de modèle de coulée, de telle sorte que le matériau de plaque de base soit enlevé de concert avec le matériau de modèle de coulée lors de l'enlèvement du matériau de modèle de coulée.
